# EUROPÄISCHE PATENTANMELDUNG

(11) **EP 2 572 927 A2**
(43) Veröffentlichungstag der Anmeldung: **27.03.2013**
(21) Anmeldenummer: 12007241.8
(22) Anmeldetag: 21.12.2007
(51) Int. Cl.: B60N 2/235, B60N 2/22

(54) **Sitzversteller, insbesondere Rückenlehnenneigungsversteller**

(30) Priorität: 28.12.2006 DE 102006062461; 02.04.2007 DE 102007016167; 29.06.2007 DE 102007030427
(62) Teilanmeldung aus: 07857059.5
(71) Anmelder: Johnson Controls GmbH, 51399 Burscheid (DE)
(72) Erfinder: Mildt, Helmut, 51789 Lindlar (DE); Albers, Franz, 51109 Köln (DE); Ihnken, Andreas, 42799 Leichlingen (DE)
(74) Vertreter: Wolff, Felix

(57) **Zusammenfassung**

Die vorliegende Erfindung betrifft einen Rückenlehnenneigungsversteller, mit dem die Neigung einer Rücklehne und/oder einem Segment einer Rücklehne relativ zu einem Sitzteil verstellbar ist, mit einem ersten Beschlagteil, das relativ zu einem zweiten Beschlagteil bewegbar und mit diesem verrastbar ist, wobei das zweite Beschlagteil an einem Rohrstück gelagert ist. Des weiteren betrifft die vorliegende Erfindung eine Fondsitzanordnung mit einer Rückenlehne, die mindestens drei Segmente aufweist, bei der jedes Segment in seiner Neigung individuell verstellbar ist.

## Beschreibung

Die Erfindung betrifft einen Rückenlehnenneigungsversteller, mit dem die Neigung einer Rücklehne und/oder eines Segmentes einer Rücklehne relativ zu einem Sitzteil verstellbar ist, mit einem ersten Beschlagteil, das relativ zu einem zweiten Beschlagteil bewegbar und mit diesem verrastbar ist. Sitzversteller, insbesondere zur Verstellung der Neigung der Rückenlehne eines Fahrzeugsitzes relativ zu dessen Sitzteil. Des weiteren betrifft die vorliegende Erfindung eine Fondsitzanordnung mit einer Rückenlehne, die mindestens drei Segmente aufweist.

Die gattungsgemäßen Rückenlehnenneigungsversteller sind aus dem Stand der Technik bekannt. Insbesondere wird auf das deutsche Patent DE 10312 140 B4 verwiesen, das hiermit als Referenz eingeführt wird und somit als Teil der Offenbarung gilt. Diese Sitzversteller werden üblicherweise über laschenartige Beschlagteile an die seitlichen Träger des Sitzteils angesetzt und mit diesem verschraubt, vernietet oder verschweißt, wie es beispielsweise in der DE 101 14 393 oder der DE 102 53 242 dargestellt ist.

Es war deshalb die Aufgabe der vorliegenden Erfindung einen Rückenlehnenneigungsversteller zur Verfügung zu stellen, der andersartig montierbar ist.

Gelöst wird die Aufgabe mit einem Rückenlehnenneigungsversteller, mit dem die Neigung einer Rücklehne und/oder einem Segment einer Rücklehne relativ zu einem Sitzteil verstellbar ist, mit einem ersten Beschlagteil, das relativ zu einem zweiten Beschlagteil bewegbar und mit diesem verrastbar ist, wobei das zweite Beschlagteil an einem Rohrstück gelagert, insbesondere befestigt ist.

Mit dem erfindungsgemäßen Rückenhlenenneigungsversteller ist es möglich, Rücklehnen mit der Kraftfahrzeugkarosserie und nicht nur mit dem Sitzteil eines Kraftfahrzeuges zu verbinden. Dadurch ergeben sich insbesondere für die Fonsitze neu Gestaltungsmöglichkeiten. Des weiteren ist es möglich mit dem erfindungsgemäßen Rückenlehnenneigungsversteller eine Fondsitzanordnung mit einer Rückenlehne zur Verfügung zu stellen, die mehrere Segmente aufweist, deren Neigung individuell einstellbar ist.

Bei dem Rückenlehnenneigungsversteller kann es sich um jeden dem Fachmann geläufigen Rückenlehnenneigungsversteller handeln. Vorzugsweise handelt es sich Jedoch um einen Rückenlehnenneigungsversteller, wie er in dem deutschen Patent DE 103 12 140 B4 beschrieben ist, das hiermit als Referenz eingeführt wird und somit als Teil der Offenbarung gilt.

Dieser Rückenlehnenneigungsversteller weist erfindungsgemäß einen Beschlagteil auf, der mit einem Rohrstück verbunden ist. Ein Rohrstück im Sinne der Erfindung ist ein innen hohles langgestrecktes Bauteil beliebiger Länge mit einem beliebigen Querschnitt, wobei der Querschnitt vorzugsweise im wesentlichen konstant ist. Der Querschnitt kann rund, oval oder vieleckig sein. Vorzugsweise ist das Rohrstück aus Stahl, Kunststoff und/oder einem Leichtmetall gefertigt.

Vorzugsweise werden beide Beschlagteile von dem Rohrstück durchdrungen. Besonders bevorzugt ist die Mittellängsachse des Rohrstücks auch die Drehachse der beiden Beschlagsteile.

Vorzugsweise ist ein Beschlagsteil mit dem Rohrstück fest verbunden. Der Beschlag kann mit dem Rohrstück stoff- form- und/oder kraftschlüssig verbunden sein. Das andere Beschlagsteil dreht sich vorzugsweise um das Rohrstück.

Vorzugsweise ist das Rohstück durch den Beschlag hindurchgeführt und steht, besonders bevorzugt an mindestens einer, ganz besonders bevorzugt an beiden Seiten aus dem Beschlag hervor. Diese bevorzugte Ausführungsform erlaubt es weitere Bauteile, insbesondere rohrförmige Bauteile mit dem Rohrstück zu verbinden. Dabei werden diese Bauteile vorzugsweise in oder über das Rohstück gesteckt und dann mit diesem verbunden. Die weiteren Bauteile können jedoch auch stoßartig mit dem Rohrstück verbunden werden.

In einer weiteren bevorzugten Ausführungsform ist an dem Rohrstück ein Form- und/oder Kraftschlussmittel angeordnet, das mit einem komplementären Form- und/oder Kraftschlussmittel an dem Beschlag zusammenwirkt.

Vorzugsweise weist der Rückenlehnenneigungsversteller einen Beschlag auf, an dem ein Sitzgurt befestigbar ist. Diese bevorzugte Ausführungsform der vorliegenden Erfindung eignet sich Insbesondere für sogenannte Gurtintegralsitze, bei dem der Sicherheitsgurt in den Kraftfahrzeugsitz integriert ist.

Ein weiterer Gegenstand der vorliegenden Erfindung ist eine Fondsitzanordnung mit einer Rückenlehne, die mindestens drei Segmente aufweist, bei der jedes Segment in seiner Neigung individuell verstellbar ist. Die Sitzanordnung bietet den darauf sitzenden Fahrzeuginsassen einen erhöhten Fahrkomfort. Des weiteren ist mit der Sitzanordnung der Laderaum in seiner Größe anpassbar.

Vorzugsweise erfolgt die Neigungsverstellung mit dem oben beschriebenen Rückenlehnenneigungsversteller.

Gemäß einem weiteren oder einem bevorzugten Gegenstand der vorliegenden Erfindung ist die Rückenlehne an zwei beabstandeten, quer zur Fahrzeugrichtung angeordneten Rohren gelagert. Diese erfindungsgemäße bzw. bevorzugte Ausführungsform der vorliegenden Erfindung hat den Vorteil, dass die Rückenlehne unabhängig von dem Fahrzeugsitz an der Karosserie des Kraftfahrzeuges montiert werden kann.

Vorzugsweise weist die Rückenlehne mehrere Segmente auf, die in ihrer Neigung individuell einstellbar sind. Besonders bevorzugt weisen die Segmente dafür jeweils einen Rückenlehnenneigungsversteller aufweisen, der mit einem der Rohre verbunden ist.

Als Rückenlehnenneigungsversteller eignet sich jeder dem Fachmann geläufige Rückenlehnenneigungsversteller. Vorzugsweise handelt es sich um den oben beschriebenen Rückenlehnenneigungsversteller.

Alle Teile der Offenbarung gelten für alle Erfindungen gleichermaßen.

Im folgenden werden die Erfindungen anhand der Figuren 1 - 6 erläutert. Diese Erläuterungen sind lediglich beispielhaft und schränken den allgemeinen Erfindungsgedanken nicht ein.

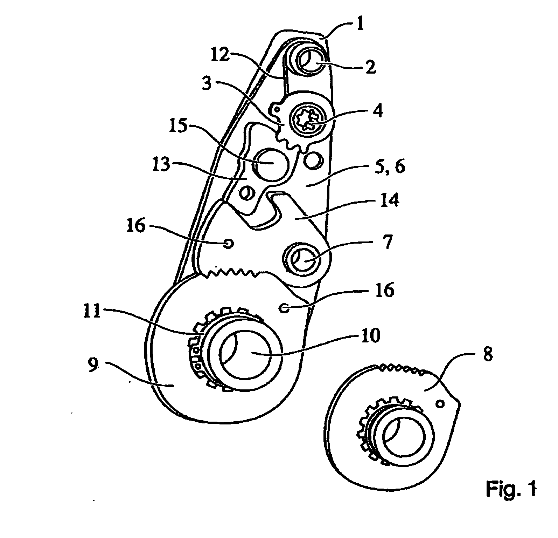

- Figur 1: zeigt den erfindungsgemäßen Rückenlehnenneigungsversteller.
- Figuren 1' - 3: zeigen ein Details des Rückenlehnenverstellers gemäß Figur 1.
- Figuren 4 - 5: zeigen die erfindungsgemäße Sitzanordnung
- Figur 6: zeigt ein Detail der Sitzanordnung gemäß den Figuren 4 - 5

Figur 1 zeigt eine Ausführungsform des erfindungsgemäßen Rückenlehenneigungsverstellers. Es handelt sich um einen Rastklinkenversteller mit einem rückenlehnenseitigen Beschlagteil 1 und einem fahrzeugseitigen Beschlagteil 9, welches mit einer Verzahnung zum Eingriff einer am rückenlehnenseitigen Beschlagteil 1 um einen Bolzen 7 drehbar angeordneten Rastklinke 14 versehen ist. Die Blechschichten der in Lagen aufgebauten Komponenten sind u. a. über Spannstifte 16 miteinander verbunden. Die Rastklinke 14 wird über einen Nocken 13 in Eingriff gehalten, der um einen Bolzen 15 drehbar ist und bei entsprechender Drehung auch ein Lösen der Rastklinke 14 bewirkt. Der Antrieb des Nockens 13 erfolgt über ein Zahnglied 3, welches auch wesentliche Teile einer den Nocken 13 spannenden Schenkelfeder 12 aufnimmt. Diese stützt sich mit einem Schenkel an einer Hülse 2 ab. Das Zahnglied 3 weist ferner eine verzahnte Ausnehmung 4 zur Aufnahme einer Übertragungsstange auf. Am Beschlagteil 1 können ferner bei hoher Belastung optional Verstärkungsplatten 5, 6 verbaut werden.

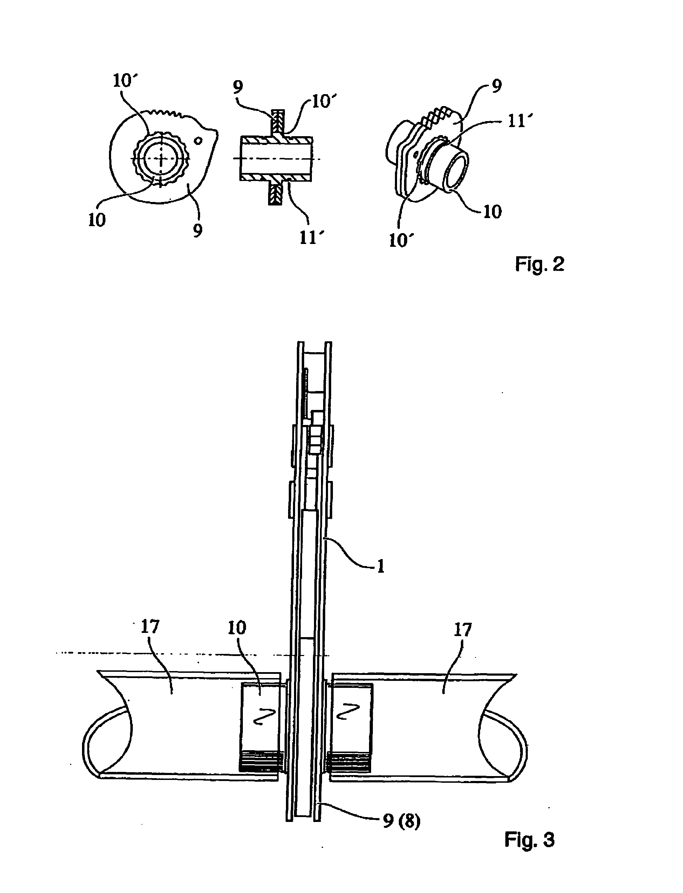

Durch das fahrzeugseitige Beschlagteil 9 ist ein Rohrstück 10 geführt, das mit einem außenverzahnten Ringfortsatz 10' versehen ist. Dieser ist drehfest in eine passende Innenverzahnung des Beschlagteils 9 eingepresst, was in Figur 2 dargestellt ist und dort beidseits über axial wirkende Sicherungsringe 11 gesichert, welche In Radialnuten 11' des Rohrstücks 10 eingesetzt werden.

Mit Bezugszeichen 8 in Fig. 1' ist gesondert ein sitzteilseitiges Beschlagteil zur Verwendung in Gurtintegralsitzen bezeichnet, welches anstelle des Beschlagteils 9 verbaut wird.

Auf das beidseits des Beschlagteils 9 (bzw. 8) auskragende Rohrstück 10 können, wie aus Fig. 3 ersichtlich, Rohrstrukturen 17 des Sitzteils aufgesteckt und mit diesem verbunden beispielsweise geschweißt werden, wobei die Rohrstrukturen 17 das Rohrstück 10 von außen überlappen. Grundsätzlich ist natürlich auch ein Einschieben durchmesserkleinerer Rohrstücke 17 oder auch ein stumpfes Verschweißen durchmesserähnlicher Rohrstücke 17 denkbar.

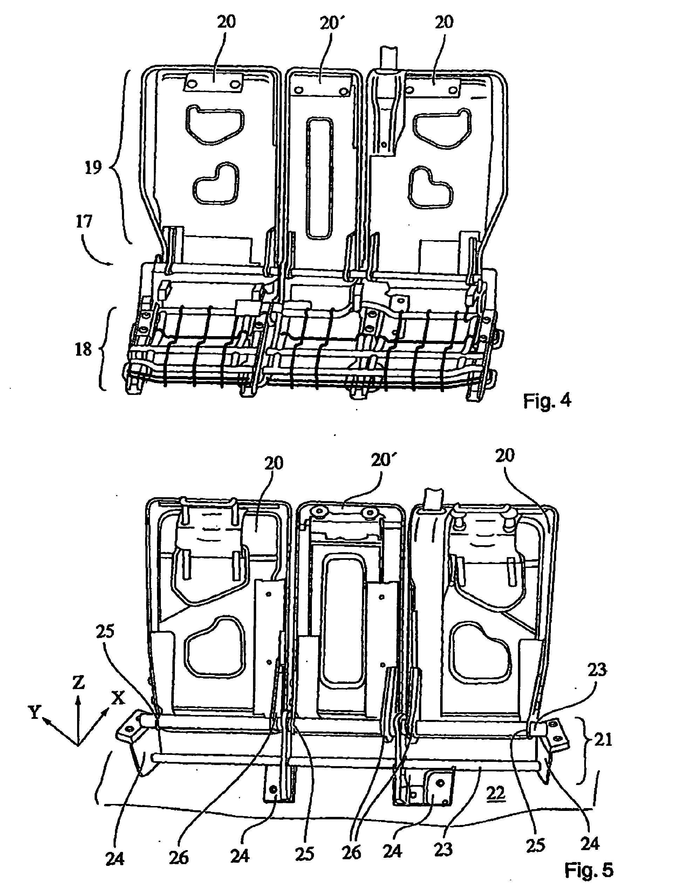

Die Figuren 4 und 5 stellen beispielhaft und schematisch eine erfindungsgemäße Fondsitzanordnung 17 mit dem erfindungsgemäßen Rückenlehnenneigungsversteller dar. Wie aus Figur 4 ersichtlich, besteht die als Rücksitzbank ausgebildete Fahrzeugsitz aus einem Sitzteil 2 und einer Rückenlehne 3, die In zwei seitliche 40%-Segmente 4 sowie ein mittleres 20%-Segment 4' gegliedert ist. Jedes Segment 4, 4' ist unabhängig vom benachbarten Segment 4', 4 in seiner Neigung einstellbar.

Wie aus Fig. 2 ersichtlich, ist die Rückenlehne 19 mittels einer quer im Fahrzeug angeordneten Konsole 21 mit dem Fahrzeugboden 22 verbunden, besitzt also keine unmittelbare Verbindung zum Sitzteil 18. Die Konsole 21 besteht aus zwei zueinander in Z-Richtung des Fahrzeugs beabstandeten, aber parallel verlaufenden, durchgängigen Querrohren 23, 23', die mitelnander sowie mit dem Fahrzeugboden 22 über entlang der Quererstreckung (Y-Richtung des Fahrzeugs) verteilt angeordnete Halterungen 24 verbunden sind.

Jedem Segment 20, 20' ist an einer seiner Seiten ein Gelenk 25 zugeordnet, welches das obere Querrohr 23 drehbar umfasst. Die jeweils gegenüberliegende Seite jedes Segments 20, 20' ist mit einer Verstelleinrichtung 26 in Form eines Rastklinkenverstellers der in den Figuren 1 - 3 beschriebenen Art ausgestattet, welche die Segmente 20, 20' jeweils in der gewünschten Neigungsstellung arretieren.

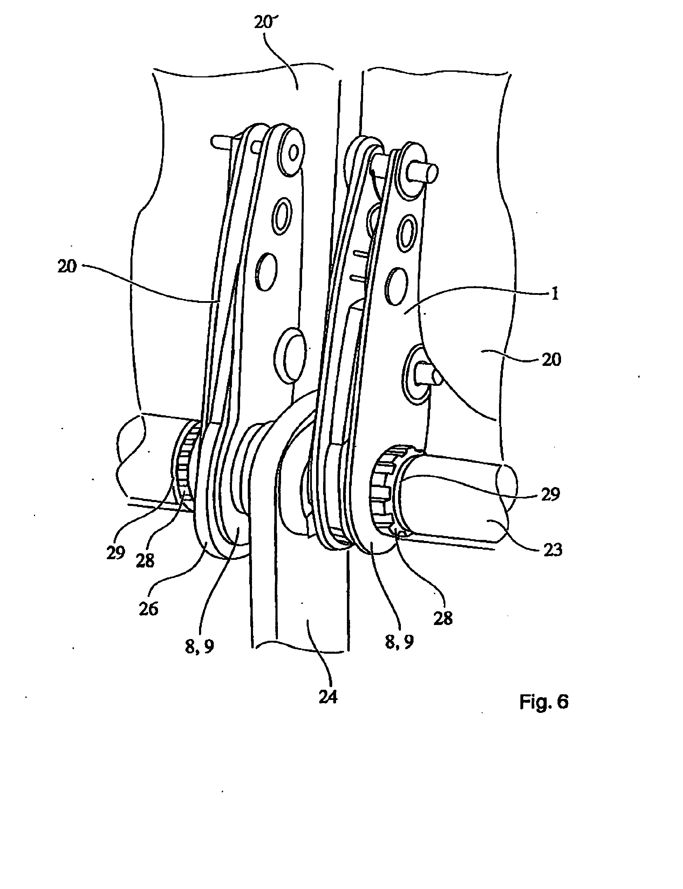

In Figur 6 sind zwei dieser Verstelleinrichtungen 26 in vergrößertem Ausschnitt dargestellt Jede Verstelleinrichtung 26 besteht aus einem ersten Beschlagteil 1, welches fest mit dem zugeordneten Segment 20, 20' der Rückenlehne 19 verbunden ist, sowie einem zweiten Beschlagteil 8, 9 (nur in der linken Verstelleinrichtung 26 gezeigt), welches drehfest an der Konsole 21 befestigt ist Beide Beschlagteile 1, 19 werden dabei vom oberen Querrohr 23 der Konsole 21 durchdrungen. Dabei ist das der Rückenlehne zugeordnete Beschlagteil 1 frei gegenüber dem Querrohr schwenkbar, während das andere Beschlagteil 19 mittels einer auf das Querrohr 23 aufgesteckten Keilverzahnung 28 formschlüssig mit diesem verbunden ist. Die Achse des Querrohrs 23 bildet dabei auch die Drehachse der Verstelleinrichtung 26 aus. Die Keilverzahnung 28 ist am Außenumfang einer Hülse 29 ausgeformt, die ihrerseits drehfest, beispielsweise durch eine Schrumpfverbindung, auf dem Querrohr 23 angeordnet Ist.
Die Entriegelung der jeweiligen Verstelleinrichtung 26 erfolgt jeweils durch den Hebel 27, der am oberen Lehnenrand angeordnet ist.

### Bezugszeichenliste:

- 1: Beschlagteil (lehnenseitig)
- 2: Hülse
- 3: Zahnglied
- 4: Ausnehmung
- 5, 6: Verstärkungsplatte
- 7: Bolzen
- 8: Beschlagteil (sitzteilseitig)
- 9: Beschlagteil (sitzteilseitig)
- 10: Rohrstück
- 10': Ringfortsatz
- 11: Sicherungsring
- 11': Radialstück
- 12: Schenkelfeder
- 13: Nocken
- 14: Rastklinke
- 15: Bolzen
- 16: Spannstift

- 17: Fondsitzanordnung, Rücksitzbank
- 18: Sitzteil
- 19: Rückenlehne
- 20, 20': Segment (der Rückenlehne)
- 21: Konsole
- 22: Fahrzeugboden
- 23, 23': Querrohr
- 24: Halterung
- 25: Gelenk
- 26: Verstelleinrichtung
- 27: Hebd
- 28: Keilverzahnung
- 29: Hülse

## Patentansprüche

1. Rückenlehnenneigungsversteller, mit dem die Neigung einer Rücklehne (19) und/oder eines Segmentes (20, 20') einer Rücklehne (19) relativ zu einem Sitzteil (18) verstellbar ist, mit einem ersten Beschlagteil (1), das relativ zu einem zweiten Beschlagteil (8, 9) bewegbar und mit diesem verrastbar ist, **dadurch gekennzeichnet, dass** das zweite Beschlagteil an einem Rohrstück (10) gelagert ist.

2. Rückenlehnenneigungsversteller nach Anspruch 1, **dadurch gekennzeichnet, dass** der Beschlag (8, 9) mit dem Rohrstück fest verbunden ist.

3. Rückenlehnenneigungsversteller nach einem der voranstehenden Ansprüche, **dadurch gekennzeichnet, dass** das Rohstück durch den Beschlag (8, 9) geführt ist.

4. Rückenlehnenneigungsversteller nach einem der voranstehenden Ansprüche, **dadurch gekennzeichnet, dass** an dem Rohrstück ein Form- und/oder Kraftschlussmittel (10') angeordnet ist, das mit einem komplementären Form- und/oder Kraftschlussmittel an dem Beschlag (8, 9) zusammenwirkt.

5. Rückenlehnenneigungsversteller nach einem der voranstehenden Ansprüche oder nach dem Oberbegriff von Patentanspruch 1, **dadurch gekennzeichnet, dass** er einen Beschlag (8) aufweist, an dem ein Sitzgurt befestigbar ist.

6. Fondsitzanordnung mit einer Rückenlehne (19), die mindestens drei Segmente (20, 20') aufweist, **dadurch gekennzeichnet dass** jedes Segment (20, 20') in seiner Neigung, vorzugsweise mit einem Rückenlehnenneigungsversteller gemäß einem der voranstehenden Ansprüche individuell verstellbar ist.

7. Fondsitzanordnung insbesondere nach Anspruch 6 mit einer Rückenlehne, **dadurch gekennzeichnet, dass** die Rückenlehne an zwei beabstandeten, quer zur Fahrzeugrichtung angeordneten Rohren (23, 23') gelagert ist.

8. Fondsitzanordnung nach einem der voranstehenden Ansprüche, **dadurch gekennzeichnet, dass** die Rückenlehne (19) mehrere Segmente (20, 20') aufweist, die in ihrer Neigung individuell einstellbar sind.

9. Fondsitzanordnung nach Anspruch 8, **dadurch gekennzeichnet, dass** die Segmente jeweils einen Neigungsversteller aufweisen, der mit dem Rohr (23) verbunden ist.

10. Fondsitzanordnung nach Anspruch 9, **dadurch gekennzeichnet, dass** es sich um den Neigungsversteller gemäß den voranstehenden Ansprüchen handelt.
